# EUROPÄISCHE PATENTSCHRIFT

(11) **EP 0 626 094 B1**
(45) Veröffentlichungstag und Bekanntmachung des Hinweises auf die Patenterteilung: **19.06.1996**
(21) Anmeldenummer: 93903904.6
(22) Anmeldetag: 04.02.1993
(51) Int. Cl.: G11B 23/087

(54) **KASSETTE MIT AUFZEICHNUNGSTRÄGER UND VERSCHLUSSORGAN DAFÜR**
CASSETTE WITH RECORDING MEDIUM AND CLOSURE THEREFOR
CASSETTE COMPRENANT UN SUPPORT D'ENREGISTREMENT ET ORGANE DE FERMETURE APPROPRIE

(30) Priorität: 15.02.1992 DE 9201958 U
(43) Veröffentlichungstag der Anmeldung: 30.11.1994
(73) Patentinhaber: BASF Magnetics GmbH, D-68165 Mannheim (DE)
(72) Erfinder: SCHÖTTLE, Klaus, D-6900 Heidelberg (DE)
(74) Vertreter: Karau, Wolfgang, Dr.
(86) Internationale Anmeldenummer: EP9300249
(87) Internationale Veröffentlichungsnummer: WO9316472

(56) Entgegenhaltungen:
- EP-A- 0 271 997
- EP-A- 0 438 144
- DE-A- 3 433 705
- US-A- 4 779 158
- US-A- 4 853 925

## Beschreibung

Die Erfindung betrifft eine Kassette mit Aufzeichnungsträger, insbesondere Magnetbandkassette, mit einem, Gehäuse und darin befindlichen Öffnungen, die mittels eines verschiebbaren Verschlußorgans verschließbar und freigebbar sind, wobei das Verschlußorgan mittels mindestens eines stegartigen Fortsatzes in wenigstens einer Nut im Gehäuse verschiebbar ist, wobei das Verschlußorgan mindestens zweiteilig und die Teile miteinander verbindbar sind, und ein Verschlußorgan für die Kassette.

Eine solche Kassette ist aus den EP-A-406 943 und 438 144 bekannt. Der darin beschriebene und dargestellte Verschlußteil ist einstückig aus dünnem, rostfreien Stahl hergestellt. Seine Form wird in der Praxis durch Stanzen oder Drahterosion und Biegen ausgebildet.

Das Kassettengehäuse besteht üblicherweise aus einem thermoplastischen Kunststoff und besitzt wenigstens eine Führungsnut zum geführten Verschieben des Verschlußteils. Letzterer weist zum selben Zweck zum Eingreifen in die Nut bestimmte Abkantungen und/oder Fortsätze auf.

Der Verschlußteil wird üblicherweise nach dem Zusammenfügen von Gehäuseober- und unterteil über das Gehäuse geschoben, wobei aufgrund der Abkantungen und Fortsätze sowohl Montagestörungen als auch Gehäuse- und Verschlußteilbeschädigungen auftreten können.

Die vorliegende Erfindung will derartige Nachteile bei Kassetten mit Verschlußorgan von vornherein vermeiden.

Mit der Kassette mit Aufzeichnungsträger, insbesondere Magnetbandkassette, mit einem Gehäuse und darin befindlichen Öffnungen, die mittels eines verschiebbaren Verschlußorgans verschließbar und freigebbar sind, wobei das Verschlußorgan mittels mindestens eines stegartigen Fortsatzes in wenigstens einer Nut im Gehäuse verschiebbar ist, wobei das Verschlußorgan mindestens zweiteilig und die Teile miteinander verbindbar sind wird die Aufgabe erfindungsgemäß gelöst, wenn die Teile aus einem im wesentlichen flachen Teil und einem etwa U-förmigen Teil bestehen, wobei der flache Teil den mindestens einen stegartigen Fortsatz für die wenigstens eine Gehäusenut aufweist, daß eine zur Gehäusenut parallelliegende zusätzliche Nut in der gegenüberliegenden Gehäuseseite vorgesehen ist und daß der U-förmige Teil einen langen und kurzen Schenkel aufweist woron der Lange Schenkel in die Gehäusenut und der kurze Schenkel in die zusätzliche nut eingreift.

Dadurch ergibt sich eine problemlose, insbesondere eine automatische Montage des Verschlußorgans unter Vermeidung der beiderseitigen Beschädigungen und eine optimale räumliche, fertigungsmäßige und montagegünstige Ausführung des Verschlußteils.

In zweckmäßiger Ausbildung können die Teile des Verschlußorgans verschiedenen Materialien, z.B. Metall und Kunststoff oder verschiedenen miteinander verbindbaren Kunststoffen, bestehen.

Es ergeben sich dadurch sehr unterschiedliche Möglichkeiten, die jede ihre Vorzüge haben.

In weiterer Ausbildung können die Teile des Verschlußorgans mittels Haken- oder Schnappverbindungen miteinander verbindbar sein.

Die Einzelteile müssen während der Montage miteinander verbunden werden. Damit ist das vollständige Verschlußteil selbst und montiert am Gehäuse der Kassette einfach herstellbar.

Zweckmäßig, um hervorstehende Teile des Verschlußteils zu vermeiden, können die Haken- und/oder Schnappverbindungen innerhalb einer gesonderten Nut des Gehäuses angeordnet sein.

Um Verbindungen mit dem bzw. Beschädigungen des Gehäusewerkstoffs zu vermeiden, können die Teile des Verschlußorgans aus miteinander verbindbaren Kunststoffen bestehen, die mit dem Gehäusematerial unverträglich sind.

In weiterer Ausgestaltung können das flache Teil und das U-form-Teil mit zum Eingreifen in die gesonderte Nut bestimmten Abkantungen versehen sein, in deren Bereich die Haken- oder Schnappverbindungen vorgesehen sind.

Das Verschlußorgan ist ebenfalls Gegenstand der Erfindung wie im folgenden ausgeführt.

Das Verschlußorgan zeichnet sich durch eine wenigstens zweiteilige Ausführungsform aus, wobei die Teile miteinander, insbesondere durch eine Haken- und/oder Schnappverbindung, verbindbar sind.

In praktischer Ausbildung ist eines der Teile im wesentlichen flach und mit Führungsfortsätzen ausgebildet und das andere Teil ist etwa U-förmig, insbesondere mit verschiedenen langen Schenkel ausgebildet. Zweckmäßig kannen die Teile aus verschiedenen Materialien, insbesondere aus Metall und Kunststoff bestehen.

Praktisch können die Teile aus verschiedenen Kunststoffmaterialien bestehen, die nicht miteinander verschweißbar, aber mechanisch miteinander verbindbar sind.

Vorteilhaft können die Teile auch aus verschiedenen, miteinander verschweißbaren Kunststoffmaterialien bestehen.

Die Erfindung wird anhand von Ausführungsbeispielen im Vergleich zum Stand der Technik in der Zeichnung dargestellt und nachfolgend beschrieben.

Es zeigen:
- Figur 1: eine Querschnittsdarstellung durch eine erfindungsgemäße Kassette gemäß Figur 2
- Figur 2: eine perspektivische Ansicht der Kassette von unten
- Figur 3: eine perspektivische Ansicht der Teile des erfindungsgemäßen Schiebers im vergrößertem Maßstab
- Figur 4: eine Querschnittsdarstellung durch eine Kassette gemaß Figur 5
- Figur 5: eine perspektivische Ansicht einer Kassette von unten
- Figur 6: eine Montagedarstellung anhand der Querschnittsdarstellung aus Figur 5

Eine bekannte Kassette (z.B. gemäß EP-A-406 943) besteht aus einem thermoplastischen Gehäuseoberteil 1 und -unterteil 2, wobei das Gehäuse die Wickelkerne 3 und den oder die darauf aufgewickelten Bandwickel 4 umschließt.

Um Band und Bandwickel 4 vor Staubeinfall und Beschädigung zu schützen, sind die nicht dargestellten Frontöffnungen und die Antriebsöffnungen 25 am Unterteil 2 des Gehäuses durch ein Verschlußorgan, das aus einem aus dünnem Metallblech gebogenen Schieber 5 besteht, abgedeckt.

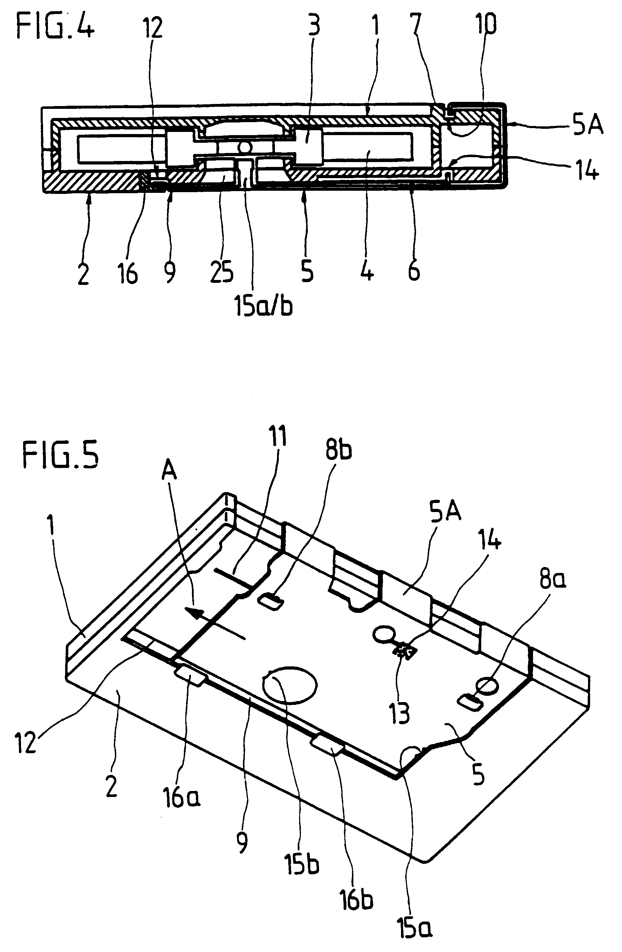

Im Gerät wird der Schieber 5 gegen die Vorspannkraft der Feder 6, die zwischen dem Gehäuse 1, 2 und dem Schieber 5 befestigt ist, in Richtung A (Figur 5) verschoben, so daß Frontöffnungen und Antriebsöffnungen freigegeben werden. Zur Verschiebungsführung besitzt der Schieber 5 an seiner Ober- und Unterseite zum Gehäuse 1, 2 hin gerichtete Abkantungen 7, 8a und b und 9, die in entsprechend angeordnete Nuten 10 bzw. 11 bzw. 12 im Gehäuse 1, 2 eingreifen.

Die Feder 6 befindet sich an der Unterseite des Schiebers 5 und wird von einer Haltelasche 13, die in einem Gehäuseschlitz 14 läuft, gehalten.

Die nach innen in die Wickelkerne 3 eingreifenden ArretierLaschen 15a und 15b dienen zur Arretierung der Bandwickel 4, wenn sich die Kassette außerhalb des Geräts befindet. L-förmige Einsätze 16a und b sind in Richtung des Pfeils E einsetzbar und durch Einklipsen oder Verschweißen mit dem Gehäuse 1, 2 verbunden und verhindern ein Herausspringen der hinteren Kante des Schiebers 5 aus der Nut 12, in die er in Normallage D eingreift.

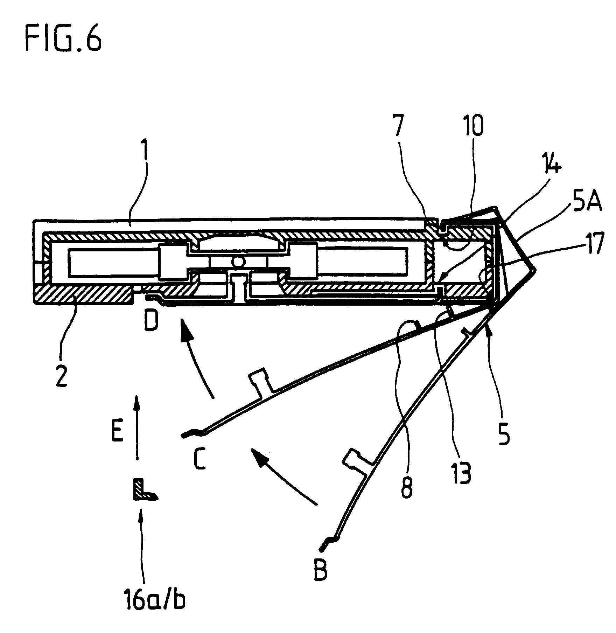

Der Schieber 5 kann bei Montage erst nach dem Zusammenfügen und gegebenenfalls Verbinden der Gehäuseteile 1 und 2 darüber geschoben werden. Dabei sind Abkantungen 7-9 und Laschen 15 wegen ihrer Höhe (bis zu 2,5 mm über der Schieberflache) äußerst hinderlich und nachteilig bis hin zu einer Verbiegung des Schiebers 5 in der Lage B, in Figur 6, worin der übliche Montagevorgang dargestellt ist.

Der in Lage B zuerst mit der Abkantung 7 in die Nut 10 eingehängte Schieber 5 muß an seinem U-Form-Teil 5A stark gespreizt werden, damit die Abkantungen 8a, b bzw. die Lasche 13 über die Kante 17 des Gehäuses 1, 2 über die Zwischenlage C in die Endlage D bringbar sind. Aufgrund der Anordnung der Abkantungen und Laschen, der Ausbildung des Schiebers 5 mit dem U-Form-Teil 5A und der notwendigen Federwirkung des Schieber-Materials besteht eine große Tendenz zum Verkratzen des Gehäuses 1, 2 bei Montage des Schiebers 5.

Es ist außerdem nachteilig, daß die L-Form-Einsätze 16 erst nach Montieren des Schiebers 5 mit dem Gehäuse verbunden werden und ein Herausspringen desselben verhindern können.

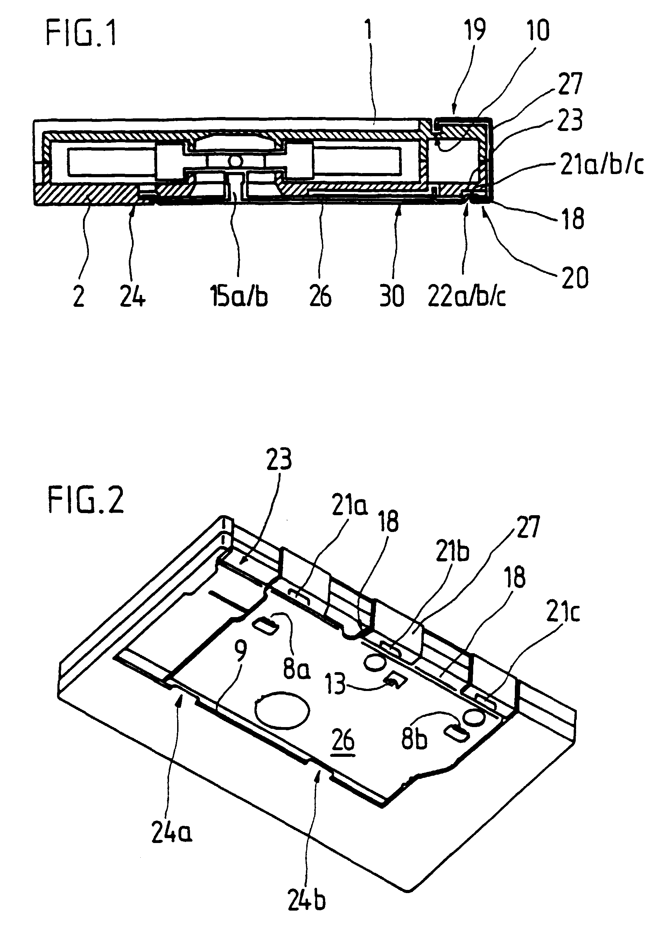

Gemäß Figuren 1 bis 3 besteht der Schieber 30 gemäß der Erfindung aus einem im wesentlichen flachen Teil 26 und einem etwa U-Form-Teil 27.

Dabei ist Teil 26 mit allen Abkantungen 8a und b, 9, HalteLasche 13 und Arretierlaschen 15a, b sowie einer zusätzlichen, der Abkantung 9 entsprechenden Abkantung 18 ausgebildet, wobei letztere in eine zur Kante 17 parallelliegende zusätzliche Nut 23 eingreift.

Der U-Form-Teil 27 ist vorteilhafterweise mit einem langen und einem kurzen Schenkel 19 bzw. 20 ausgebildet, wobei der lange Schenkel 19 zweckmäßig in die Nut 10 am Gehäuse-Oberteil 1 und der kurze Schenkel 20 in die Nut 23 eingreift.

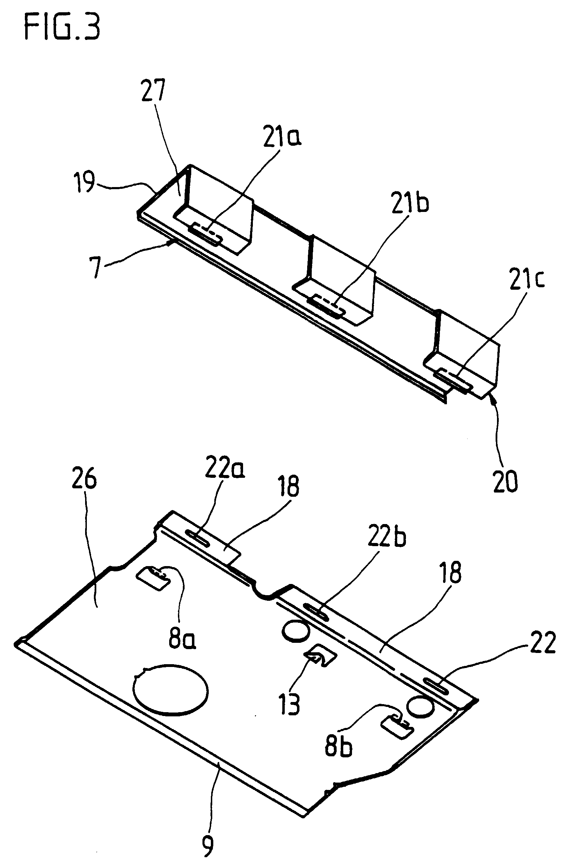

Am kurzen Schenkel 20 sind außerdem zum Kassetteninnern hin gerichtete Teilabkantungen oder Haken 21a, b, c abgebogen, die in entsprechende Schlitze 22a, b, c in der Abkantung 18 des flachen Teils 26 einschnappen, vgl. Figur 3.

Für die Haken- und/oder Schnappverbindungen ist jede geeignete Verbindungsart verwendbar, dieselben sollen jedoch so dimensioniert sein, daß sie in die Nut 23 ohne Überstand hineinpassen.

Die Haken (21)-Schlitz(22)-Verbindung kann auch mit entsprechenden Widerhaken oder ähnlich unlösbar ausgeführt werden.

Erfindungsgemäß sind bei den Flach- und U-Form-Teilen 26 bzw. 27 die Werkstoff-Kombinationen möglich: Metall-Kunststoff, Kunststoff-Kunststoff, die nicht Verschweißt werden, sondern mechanisch verbunden werden, sowie Kunststoff-Kunststoff, die miteinander verschweißbar sind. Ist die letzte, miteinander verschweißbare Kombination ein mit dem Gehäuse-Kunststoff, z.B. ABS, unverträglicher Kunststoff, z.B. ein Polyoxymethylen, so ist das Verschweißen nach Montage der Teile aus Gehäuse 1, 2 möglich. Damit können alle Verbindungselemente 21 und 22 zwischen den Teilen 26 und 27 des Schiebers 30 eingespart werden.

Die Metall-Kunststoff-Kombination, wobei der flache Teil 26 vorteilhafterweise mit allen Abkantungen und Fortsätzen aus Kunststoff und der U-Form-Teil 27 aus Metall, wegen der in diesem Bereich notwendigen, sehr hohen Präzision, gefertigt ist, ist die zweckmäßigste. Selbstverständlich ist ein technisch equivalenter Ersatz des Metallblechs durch geeignete Kunststoffe ebenfalls möglich. Auf jeden Fall ist die Fertigung der aus Kunststoff mit etwa 0,5 mm Dicke zu spritzenden Teile 26 und 27 des erfindungsgemäßen, zumindest zweiteiligen Schiebers 30 erheblich einfacher und problemloser als die des einteiligen Schiebers 5.

Wie noch in Figur 2 erkennbar, sind die L-Form-Einsätze 16a, b aus Figur 4 und 5 durch am Unterteil 2 direkt ausgebildete Hinterschneidungen 24a, b ersetzt, wodurch die Montage des Schiebers 30 weiter vereinfacht wird und die Teile 16a, b eingespart werden.

Eine Kassette oder ein Behälter mit einem Aufzeichnungsträger ist mit einem verschiebbaren Verschlußorgan für wenigstens eine Öffnung ausgebildet. Das Verschlußorgan ist zumindest zweiteilig, wobei der eine Teil aus Kunststoff und der andere aus Metall oder beide aus Kunststoff bestehen.

Das Verschlußorgan ist für alle mit verschiebbaren Verschlußteilen ausgestatteten Behälter mit Aufzeichnungsträgern mit Vorteil verwendbar.

## Patentansprüche

1. Kassette mit Aufzeichnungsträger, insbesondere Magnetbandkassette, mit einem Gehäuse (12) und darin befindlichen Öffnungen, die mittels eines verschiebbaren Verschlußorgans (5) verschließbar und freigebbar sind, wobei das Verschlußorgan (5) mittels mindestens eines stegartigen Fortsatzes (8,9) in wenigstens einer Nut im Gehäuse (1,2) verschiebbar ist, wobei das Verschlußorgan mindestens zweiteilig und die Teile miteinander verbindbar sind, dadurch gekennzeichnet, daß die Teile aus einem im wesentlichen flachen Teil (26) und einem etwa U-förmigen Teil (27) bestehen, wobei der flache Teil (26) den mindestens einen stegartigen Fortsatz (8,9) für die wenigstens eine Gehäusenut (10, 11) aufweist, daß eine zur Gehäusenut (10, 11) parallelliegende zusätzliche Nut (23) in der gegenüberliegenden Gehäuseseite vorgesehen ist und daß der U-förmige Teil (27) einen langen und kurzen Schenkel (19 bzw. 20) aufweist woron der Lange Schenkel (19) in die Gehäusenut (10) und der kurze Schenkel (20) in die zusätzliche Nut (23) eingreift.

2. Kassette nach Anspruch 1, dadurch gekennzeichnet, daß die Teile (26,27) aus verschiedenen Materialien, z.B. Metall und Kunststoff oder verschiedenen miteinander verbindbaren Kunststoffen, bestehen.

3. Kassette nach Anspruch 1, dadurch gekennzeichnet, daß die Teile (26 und 27) des Verschlußorgans (30) mittels Haken- oder Schnappverbindungen (21a-c, 22a-c) miteinander verbindbar sind.

4. Kassette nach Anspruch 3, dadurch gekennzeichnet, daß die Haken- oder Schnappverbindungen (21a-c, 22a-c) innerhalb der zusätzlichen Nut (23) des Gehäuses (1,2) angeordnet sind.

5. Kassette nach Ansprüchen 1 oder 2, dadurch gekennzeichnet, daß die Teile (26,27) des Verschlußorgans (30) aus miteinander verschweißbaren Kunststoffen bestehen, die mit dem Kunststoffmaterial des Gehäuses (1,2) unverträglich sind.

6. Kassette nach Anspruch 4, dadurch gekennzeichnet, daß der flache Teil (26) und der U-form-Teil (27) mit zum Eingreifen in die zusätzliche Nut (23) bestimmten Abkantungen (18, 21a-c) versehen sind, in deren Bereich die Haken- oder Schnappverbindungen vorgesehen sind.

7. Verschlußorgan für eine Kassette nach Anspruch 1 wobei, das Verschlußorgan mindestens Zweiteilig und die Teile miteinander Verbindbar sind , dadurch gekennzeichnet, daß eines der Teile (26) im wesentlichen flach und mit dem wenigstens einem stegartigen Forsatz (8,9) ausgebildet ist und der andere Tei (27) etwa U-förmig mit verschieden langen Schenkeln (19,20), ausgebildet ist.

8. Verschlußorgan nach Anspruch 7, gekennzeichnet durch eine Ausbildung der zwei Teile (26 und 27) mit Haken- und/oder Schnappverbindungen (21a-c, 22a-c).

9. Verschlußorgan nach Anspruch 7 oder 8, dadurch gekennzeichnet, daß die Teile (26,27) aus verschiedenen Materialien, insbesondere aus Metall und Kunststoff, bestehen.

10. Verschlußorgan nach Anspruch 9, dadurch gekennzeichnet, daß die Teile (26,27) aus verschiedenen, nicht durch Verschweißen, verbindbaren Kunststoffmaterialien bestehen.

11. Verschlußorgan nach Anspruch 9, dadurch gekennzeichnet, daß die Teile (26,27) aus verschiedenen, miteinander verschweißbaren Kunststoffmaterialien bestehen.

## Claims

1. A cassette with recording medium, in particular a magnetic tape cassette, having a housing (12) and openings located therein, which can be closed and exposed by means of a displaceable closure member (5), the closure member (5) being displaceable in at least one groove in the housing (1, 2) by means of at least one web-like prolongation (8, 9), the closure member being in at least two parts and the parts (26, 27) being interconnectable, wherein the parts comprise a substantially flat part (26) and an approximately U-shaped part (27), the flat part (26) having the at least one web-like prolongation (8, 9) for the at least one housing groove (10, 11), wherein an additional groove (23), lying parallel to the housing groove (10, 11) is provided in the opposite side of the housing and wherein the U-shaped part (27) has a long and short leg (19 and 20, respectively), of which the long leg (19) engages in the housing groove (10) and the short leg (20) engages in the additional groove (23).

2. A cassette as claimed in claim 1, wherein the parts (26, 27) consist of different materials, for example metal and plastic or different interbondable plastics.

3. A cassette as claimed in claim 1, wherein the parts (26, 27) of the closure member (30) are interconnectable by means of hook or snap connections (21a-c, 22a-c).

4. A cassette as claimed in claim 3, wherein the hook or snap connections (21a-c, 22a-c) are arranged within the additional groove (23) of the housing (1, 2).

5. A cassette as claimed in either claim 1 or claim 2, wherein the parts (26, 27) of the closure member (30) consist of interfusible plastics which are incompatible with the plastics material of the housing (1, 2).

6. A cassette as claimed in claim 4, wherein the flat part (26) and the U-shaped part (27) are provided with bent-off portions (18, 21a-c) which are intended for engaging in the additional groove (23) and in the region of which the hook or snap connections are provided.

7. A closure member for a cassette as claimed in claim 1, the closure member being in at least two parts and the parts being interconnectable, wherein one of the parts (26) is designed substantially flat and with the at least one web-like prolongation (8, 9) and the other part (27) is designed approximately U-shaped with legs (19, 20) of different lengths.

8. A closure member as claimed in claim 7, comprising a design of the two parts (26 and 27) with hook and/or snap connections (21a-c, 22a-c).

9. A closure member as claimed in claim 7 or 8, wherein the parts (26, 27) consist of different materials, in particular of metal and plastic.

10. A closure member as claimed in claim 9, wherein the parts (26, 27) consist of different plastics materials which cannot be bonded by fusing.

11. A closure member as claimed in claim 9, wherein the parts (26, 27) consist of different, interfusible plastics materials.

## Revendications

1. Cassette avec support d'enregistrement, en particulier cassette à bande magnétique, comportant un boîtier (12) et des ouvertures qui y sont ménagées et susceptibles d'être fermées et dégagées au moyen d'un organe d'obturation (5) déplaçable, l'organe d'obturation (5) étant déplaçable à l'aide d'au moins un prolongement (8, 9) en forme de barrette, dont au moins une rainure ménagée dans le boîtier (1, 2), l'organe d'obturation étant réalisée au moins en deux parties et les parties étant susceptibles d'être reliées ensemble, caractérisée par le fait que les parties sont constituées d'une partie (26) sensiblement plate et d'une partie (27) à peu près en forme de U, la partie plate (26) présentant le (au moins un) prolongement (8, 9) en forme de barrette destiné à au moins une rainure du boîtier (10, 11) et présentant une rainure (23) supplémentaire, parallèle à la rainure du boîtier (10, 11) et ménagée dans la face de boîtier opposée et que la partie en U (27) présente une branche longue et une branche courte (19, respectivement 20), dont la branche longue (19) s'engage dans le boîtier (10) et la branche courte (20) s'engage dans la rainure supplémentaire (23).

2. Cassette selon la revendication 1, caractérisé par le fait que les parties (26, 27) sont constituées de matériaux différents, par exemple de métal et de matière plastique ou bien de matières plastiques différentes pouvant être reliées ensemble.

3. Cassette selon la revendication 1, caractérisé par le fait que les parties (26 et 27) de l'organe d'obturation (30) sont susceptibles d'être reliées ensemble au moyen de liaisons à crochet ou à encliquetage (21a à c, 22a à c).

4. Cassette selon la revendication 3, caractérisée par le fait que les liaisons à crochet ou à encliquetage (21a à c, 22a à c) sont disposées à l'intérieur de la rainure supplémentaire (23) du boîtier (1, 2).

5. Cassette selon la revendication 1 ou 2, caractérisé par le fait que les parties (26, 27) de l'organe d'obturation (30) sont constituées de matières plastiques pouvant être soudées ensemble, incompatibles avec la matière plastique du boîtier (1, 2).

6. Cassette selon la revendication 4, caractérisée par le fait que la partie plate (26) et la partie en U (27) sont pourvues de décrochements (18, 21a à c) conçus pour s'engager dans la rainure supplémentaire (23) et dans la zone desquels sont prévues les liaisons à crochet ou à encliquetage.

7. Organe d'obturation pour la cassette selon la revendication 1, l'organe obturateur étant constitué au moins en deux parties et les parties étant susceptibles d'être reliées ensemble, caractérisé par le fait que l'une des parties (26) est de réalisation sensiblement plate et comporte le (au moins un) prolongement (8, 9) en forme de barrette et l'autre partie (27) est de réalisation à peu près en U avec des branches (19, 20) de longueurs différentes.

8. Organe d'obturation selon la revendication 7, caractérisé par une réalisation des deux parties (26 et 27) avec des liaisons à crochet et/à encliquetage (21a à c, 22a à c).

9. Organe d'obturation selon la revendication 7 ou 8, caractérisé par le fait que les parties (26, 27) sont réalisées en des matériaux différentes, en particulier en métal ou en matière plastique.

10. Organe d'obturation selon la revendication 9, caractérisé par le fait que les parties (26, 27) sont réalisées en des matières plastiques différentes pouvant être reliées, mais pas au moyen d'un soudage.

11. Organe d'obturation selon la revendication 9, caractérisé par le fait que les parties (26, 27) sont constituées de matières plastiques différentes, susceptibles d'être soudées ensemble.
